# EUROPÄISCHE PATENTSCHRIFT

(11) **EP 2 082 930 B1**
(45) Veröffentlichungstag und Bekanntmachung des Hinweises auf die Patenterteilung: **12.11.2014**
(21) Anmeldenummer: 09000760.0
(22) Anmeldetag: 21.01.2009
(51) Int. Cl.: G01B 11/02, G01B 11/25, B60S 3/06

(54) **Behandlungsanlage und Behandlungsverfahren für Landfahrzeuge, insbesondere Autowaschanlage**
Treatment process and treatment plant for agricultural vehicles, in particular a car wash facility
Installation de traitement et procédé de traitement pour véhicules agricoles, en particulier installation de lavage automatique

(30) Priorität: 23.01.2008 DE 202008000993 U
(43) Veröffentlichungstag der Anmeldung: 29.07.2009
(73) Patentinhaber: Otto Christ AG, 87734 Benningen (DE)
(72) Erfinder: Christ, Markus, 87700 Memmingen (DE)
(74) Vertreter: Ernicke, Hans-Dieter

(56) Entgegenhaltungen:
- DE-A1- 4 428 069
- DE-C1- 4 330 846
- DE-U1-202005 019 418
- DE-U1-202006 000 899
- JP-A- 2006 007 812
- Präsentation "Vision Sensoren" der Firma ifm electronic

## Beschreibung

Die Erfindung betrifft eine Behandlungsanlage und ein Behandlungsverfahren für Landfahrzeuge, insbesondere eine Autowaschanlage, mit den Merkmalen im Oberbegriff des Verfahrens- und Vorrichtungshauptanspruchs.

Derartige Autowaschanlagen sind aus der Praxis bekannt. Sie bestehen z.B. aus ein oder mehreren Portalen mit darin angeordneten Behandlungsaggregaten, z.B. Waschbürsten, Hochdruckwascheinrichtungen, Trockeneinrichtungen etc., die in Anpassung an die Fahrzeugkontur relativ zum Fahrzeug zugestellt und entlang des Fahrzeugs bewegt werden sollen. Hierfür ist eine Erfassungseinrichtung für die Fahrzeugkontur vorhanden.

Die JP 2006-007 812 A1 zeigt eine Autowaschanlage mit einer Erfassungseinrichtung für die Position und die frontseitige Nummernplatte eines Fahrzeugs in der Waschanlage. Die Erfassungseinrichtung besteht aus zwei an unterschiedlichen Anlagenstellen mit bekannter Position angeordneten Kameras und einer Bildauswertung für die aufgenommenen 2D-Kamerabilder. Eine frontseitige Kamera nimmt ein Frontbild des eingefahrenen Fahrzeugs und seiner Nummernplatte auf. Die Bildauswertung erfasst den Inhalt der Nummernplatte zur Gewinnung einer Umrissinformation des Fahrzeugs und berechnet durch Abstandsermittlung von Bildpunkten und durch Triangulation den horizontalen Abstand der Nummernplatte in der Anlage. Die Waschanlage wird über die abgeleitete Umrissinformation gesteuert, wobei eine zweite Kamera den Waschprozess und das Zusammenwirken von Wascheinrichtung und Fahrzeug überwacht sowie evtl. Sonderformen oder Anbauten des Fahrzeugs, z.B. Heckflügel, detektiert.

Die DE 44 28 069 A1 lehrt eine Oberflächenreinigungsanlage für Flugzeuge mit einem auf dem Flugfeld verfahrbaren mehrarmigen Großmanipulator auf einem LKW. Auf dem LKW ist eine Entfernungsbildkamera angeordnet, die zur Einmessung des Großmanipulators dient und die einzelne Gelenke des Großmanipulators sowie das Flugzeug vermisst und hinsichtlich Kollisionen kontrolliert.

Aus der DE 20 2006 000 899 U1 ist es bekannt, die Fahrzeugkontur mit einem Lichtschnittverfahren unter Verwendung von mindestens zwei Lichtquellen zu erfassen. Die voneinander beabstandeten Lichtquellen befinden sich in einer Ebene und Fächer auf die Fahrzeugoberfläche, wobei die beleuchteten Stellen von zwei räumlich getrennten und von den Lichtfächern abgesetzten Bilderfassungseinheiten mit schrägen Aufnahmewinkeln als zweidimensionales Abbild aufgenommen und an die Anlagensteuerung übermittelt werden. Diese Linienerfassung erfolgt während einer Überfahrt des Portals mehrmals am Fahrzeug, wobei die erfassten Daten zu einer dreidimensionalen Kontur zusammengesetzt werden.

Aus der DE 20 2005 019 418 U1 ist eine optische dreidimensionale Konturenerfassung mit einem Laserscanner bekannt, der zwei voneinander beabstandete Laserköpfe aufweist, die einen Laserstrahl über die Fahrzeugoberfläche wandern lassen und die Koordinaten der Auftreffpunkte durch eine Abstandsmessung an Hand des reflektierten Laserlichts erfassen. Aus der bekannten Position der Laserlichtquelle und dem bekannten Abstrahlwinkel können diese Positionskoordinaten aus der Abstandsmessung ermittelt werden. Auch hier findet die dreidimensionale Konturenerfassung bei einer Relativbewegung zwischen Fahrzeug und Waschportal statt.

In der Praxis gibt es weitere Ausführungsformen. Einerseits ist eine Konturenerfassung über den Anpressdruck von Waschbürsten möglich. Alternativ werden Lichtschranken eingesetzt, die z.B. an der höhenverstellbaren Dachtrockendüse oder an einem horizontalen Waschdüsenrohr montiert sind. Ferner ist es bekannt, vor Autowaschanlagen eine stationäre Lichtschranke anzuordnen und die Höhenkontur des vorbeifahrenden Fahrzeugs aufzunehmen. Allen vorbekannten Erfassungseinrichtungen ist gemeinsam, dass sie nur in einem begrenzten Umfang die relevanten Formmerkmale am Fahrzeug aufnehmen können.

Die Präsentation "Vision Sensoren" (Seite 18) der Firma ifm electronic in November 2007 auf der Messe SPS in Nürnberg ist auch Stand der Technik.

Es ist Aufgabe der vorliegenden Erfindung, eine verbesserte Erfassungstechnik und eine damit ausgerüstete Behandlungsanlage aufzuzeigen.

Die Erfindung löst diese Aufgabe mit den Merkmalen im Verfahrens- und Vorrichtungshauptanspruch.

Die Ausbildung der Erfassungseinrichtung als Bilderfassungs- und Entfernungsmesseinrichtung zum dreidimensionalen Abtasten und Erfassen der Fahrzeugoberfläche erlaubt es, alle für die Behandlung erforderlichen oder nützlichen Formmerkmale des Fahrzeugs in einer dreidimensionalen Bildinformation zu erfassen und zu verarbeiten. Im Unterschied zum Stand der Technik werden größere Bereiche der Fahrzeugoberfläche als Bild erfasst. Insbesondere kann eine dreidimensionale Hüllfläche oder Hüllkontur des gesamten Fahrzeugs oder der für den Behandlungsprozess relevanten Fahrzeugteile aufgenommen werden.

Außerdem kann die Fahrzeugposition aufgenommen und die dreidimensionale Fahrzeugkontur in einen räumlichen Bezug zur Behandlungsanlage und deren Behandlungsaggregaten gesetzt werden. Vorteilhafterweise genügt hierfür eine einzelne Bilderfassungs- und Entfernungsmesseinrichtung.

Die Fahrzeugoberfläche kann mit der Bilderfassungs- und Entfernungsmesseinrichtung berührungsfrei und damit ohne u.U. schädliche Einwirkungen auf das Fahrzeug abgetastet werden. Das optische Erfassen der Fahrzeugoberfläche und die Auswertung der dreidimensionalen Bildinformationen können sehr schnell geschehen. Die Bildauswertung kann vor Beginn des Behandlungsprozesses abgeschlossen sein. Eine Relativbewegung zwischen dem Fahrzeug und der Erfassungseinrichtung sowie eine Portalfahrt während der Bilderfassung wie bei einem Lichtschnittverfahren oder einem Laserscanner ist nicht zwingend erforderlich. Allerdings können mehrere Bilder des gesamten Fahrzeugs oder eines Fahrzeugausschnitts aus der gleichen Perspektive oder aus unterschiedlichen Perspektiven aufgenommen und zu einem dreidimensionalen Gesamtbild des Fahrzeugs zusammengesetzt werden.

Mit der Bilderfassung ist es ferner möglich, Fahrzeugtypen zu erkennen und die hierzu bekannten Formmerkmale in die Messung, Konturenerkennung und Konturensteuerung der Behandlungsanlage einzubeziehen. Hierfür können die erfassten Bildinformationen mit gespeicherten Bilddaten von bekannten Fahrzeugen verglichen und ausgewertet werden.

Vorteilhafterweise ist die beanspruchte Bilderfassungs- und Entfernungsmesstechnik unempfindlich gegen Fremdlicht, insbesondere wechselndes Umgebungslicht und Sonneneinstrahlung. Hierfür sind der Einsatz einer modulierten Lichtquelle und eine Lichtemission im unsichtbaren Lichtbereich, insbesondere im Infrarotbereich günstig. Das Fahrzeug kann dabei großflächig beleuchtet werden.

Für die dreidimensionale Bilderfassung wird vorteilhafterweise ein Photomischdetektor eingesetzt, der eine Sensoranordnung in einer Pixelmatrix mit einer geeigneten Auflösung sowie eine integrierte oder zugeordnete Lichtquelle aufweist. Solche Sensoranordnungen sind z.B. als sog. PMD-Kameras auf dem Markt verfügbar.

Die beanspruchte Bilderfassungs- und Entfernungsmesseinrichtung kann für beliebige Arten von Fahrzeugbehandlungsanlagen eingesetzt werden. Dies können Autowaschanlagen in beliebigen Varianten, z.B. Portalwaschanlagen, Autowaschstraßen, Taktanlagen oder dgl. sein. Auch ein Einsatz bei Polieranlagen ist möglich. Bei den Fahrzeugen handelt es sich um LKWs. Bei LKW-Waschanlagen ergeben sich wegen der manchmal stark zerklüfteten LKW-Kontur, z.B. bei Sattelzügen oder bei LKWs mit Sonderaufbauten, besondere Vorteile. Die beanspruchte Technik lässt sich außerdem für die Reinigung von Schienenfahrzeugen einsetzen.

Die beanspruchte Bilderfassungs- und Entfernungsmesseinrichtung kann in neuen Behandlungsanlagen integriert sein. Sie kann alternativ an vorhandenen Behandlungsanlagen nachgerüstet und ggf. gegen andere vorhandene Erfassungseinrichtungen ausgetauscht werden. Die beanspruchte Bilderfassungs- und Entfernungsmesseinrichtung hat den Vorteil einer komplexeren und präziseren Erfassung der Fahrzeugoberfläche, wobei die Messergebnisse auch qualitativ besser als bei den vorbekannten Erfassungseinrichtungen sind. Die erfindungsgemäße Erfassungstechnik ist außerdem besonders kostengünstig, platzsparend und wenig störanfällig.

Das beanspruchte Verfahren und die Behandlungsvorrichtung sind besonders für LKW's vorgesehen und angepasst. Sie eignen sich jedoch auch für beliebige andere Arten von Fahrzeugen.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Stirnansicht einer Behandlungsanlage für Fahrzeuge mit einem Portal und einer Kamera,
- Figur 2:: eine Seitenansicht der Behandlungsanlage von Figur 1,
- Figur 3 und 4:: die Kamera in Seiten- und Stirnansicht.

Die Erfindung betrifft ein Verfahren und eine Behandlungsanlage (1) für Fahrzeuge (2), die mit einer Erfassungseinrichtung (3) in zum dreidimensionalen Abtasten und Erfassen der Fahrzeugoberfläche ausgerüstet ist. Die Erfindung betrifft außerdem diese Erfassungseinrichtung (3), die an vorhandenen Behandlungsanlagen (1) im Wege der Nachrüstung oder Umrüstung angebaut werden kann. Sie kann außerdem an anderen Arten von stationären oder mobilen Fahrzeugbehandlungsanlagen (1), z.B. für Schienenfahrzeuge eingesetzt werden. Die Fahrzeuge (2) sind bevorzugt LKW's.

Die gezeigte stationäre Behandlungsanlage (1) kann von beliebiger Bauart und Größe sein. Es kann sich z.B. um eine Autowaschanlage oder um eine Polieranlage handeln. Diese Anlagentypen können ihrerseits wieder beliebig als Portalanlage mit ein oder mehreren relativ zum stehenden Fahrzeug (2) beweglichen Portalen (4) ausgebildet sein. Alternativ ist eine Taktanlage mit mehreren Portalen möglich, wobei das Fahrzeug (2) zwischen den Portalstationen mit Eigenantrieb bewegt wird. Als weitere Variante kann eine Autowaschstraße mit mehreren stationären oder begrenzt beweglichen Portalen vorgesehen sein, in der die Fahrzeuge (2) mittels einer geeigneten Schleppeinrichtung, z.B. einer Schleppkette, durch die Straße transportiert werden. Daneben sind beliebige andere Bauformen möglich.

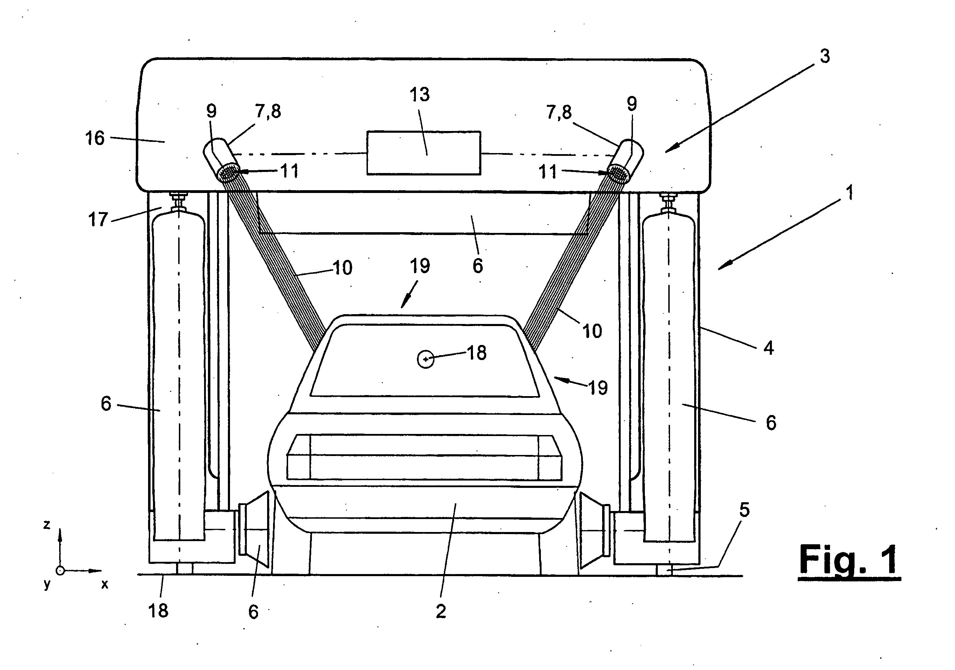

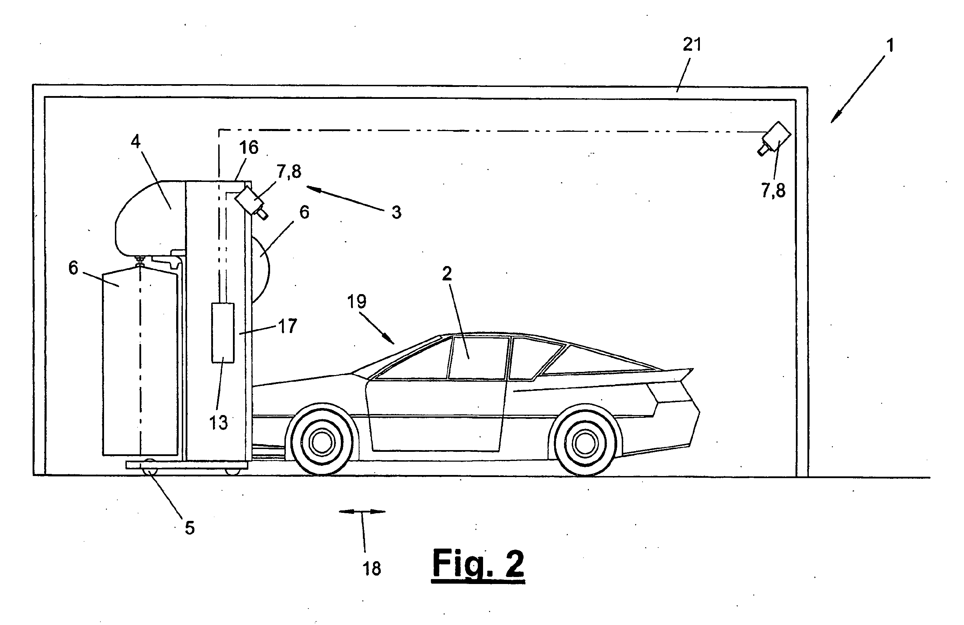

In der in Figur 1 und 2 gezeigten Behandlungsanlage (1) sind in einem Behandlungsraum (21), z.B. einer Waschhalle, ein oder mehrere Portale (4) oder andere geeignete Trageinrichtungen vorhanden. Die Behandlungsanlage (1) weist ein oder mehrere Behandlungsaggregate (6) auf, die z.B. am Portal (4) angeordnet sind. Diese Behandlungsaggregate (6) können z.B. die schematisch angedeuteten vertikalen Seitenbürsten sowie die Radwaschbürsten und auch ein oder mehrere horizontale Dachbürsten sein. Zu den Behandlungsaggregaten (6) können ferner z.B. Auftragvorrichtungen für fluidische Substanzen, insbesondere Spülwasser, Reinigungsmittel, Schaum etc. sowie evtl. Hochdruckwascheinrichtungen und auch Trockeneinrichtungen zählen. Die Art, Zahl und Ausbildung der Behandlungsaggregate (6) ist beliebig wählbar und richtet sich auch danach, ob es sich um eine Waschanlage oder Polieranlage handelt.

Ein oder mehrere Behandlungsaggregate (6) können vorzugsweise mittels einer geeigneten Zustelleinrichtung (nicht dargestellt) in eine Arbeits- oder Behandlungsposition an das Fahrzeug (2) zugestellt werden. Sie können außerdem vom Portal (4) relativ zum Fahrzeug (2) bewegt werden, so dass die Zustellung nach mehreren Richtungen in der Fahrachse und quer dazu erfolgen kann. Die zustellung kann in einer nach der räumlichen Fahrzeug- oder Karosserieform und Fahrzeugposition optimierten Weise geschehen. Z.B. können der lokale Abstand und/oder die Ausrichtung einer Hochdruck- oder Trockendüse, einer Waschbürste oder eines anderen Behandlungsaggregats (6) nach der Form des momentan beaufschlagten Fahrzeugbereichs behandlungsgünstig optimiert werden. Die räumliche Form des Fahrzeugs (2) meint z.B. den Ort, die Ausrichtung und die Krümmung der beaufschlagten Fahrzeugflächen.

Die Behandlungsanlage (1) besitzt eine Erfassungseinrichtung (3) für mehrere Formmerkmale des Fahrzeugs (2). Dies können äußere Formmerkmale, insbesondere Konturmerkmale sein. Dies schließt auch die Abmessungen des Fahrzeugs (2) ein. Dabei kann die Position und Ausrichtung des Fahrzeugs (2), z.B. die tatsächliche Parkposition und eine evtl. Schrägstellung abgetastet und erfasst werden. Die Abtastung kann berührungslos und z.B. optisch erfolgen. Die Formmerkmale können für den Behandlungsprozess, insbesondere den Waschprozess, relevant sein, indem z.B. ein Sprühauftrag in der Menge und Auftragrichtung des Fluids nach der Form und Position des Fahrzeugs (2) ausgerichtet wird. Die erfassten Formmerkmale können zu unterschiedlichen Zwecken, z.B. zur Steuerung der Behandlungseinrichtung (1) und insbesondere ihrer Behandlungsaggregate (6), benutzt werden.

Die Erfassungseinrichtung (3) weist mehrere Bilderfassungseinrichtungen (7) mit integrierter Entfernungsmesseinrichtung (8) zum dreidimensionalen Abtasten und Erfassen größerer Bereiche der Fahrzeugoberfläche auf. Zumindest zwei Bilderfassung- und Entfernungsmesseinrichtungen (7, 8) sind am Portal (4) angeordnet.

In der gezeigten Ausführungsform sind mehrere Bilderfassungs- und Entfernungsmesseinrichtungen (7,8) vorgesehen, die jeweils mindestens einen Abschnitt des Fahrzeugs (2), z.B. Teile des Front-, Dach-, Heck- und Seitenbereichs (19), erfassen. Hierbei kann die gesamte, für den Behandlungsprozess relevante Fahrzeugkontur oder nur ein Teil dieser Kontur erfasst werden. Die Bilderfassungs- und Entfernungsmesseinrichtungen (7,8) sind am Portal (4) und an der Hallenwand oberhalb des Fahrzeugs (2) angeordnet und zu diesem hin gerichtet. zwei Bilderfassungs- und Entfernungsmesseinrichtung (7,8) befinden sich stationär am horizontalen Querjoch (16) des Portals (4) und mit Seitenversatz neben der Behandlungs- oder Waschposition des Fahrzeugs (2) angeordnet. Alternativ ist auch eine Anordnung im oberen Bereich der vertikalen ständer oder Säulen (17) des Portals (4) möglich. In der gezeigten Ausführungsform ist außerdem das Portal (4) in der in Figur 1 und 2 durch einen Pfeil verdeutlichten Fahrtrichtung (18) relativ zum vorzugsweise stehenden Fahrzeug (2) verfahrbar angeordnet.

Das Fahrzeug (2) wird in der gezeigten Ausführungsform von mehreren Seiten her optisch abgetastet. Alternativ ist eine einseitige Erfassung möglich, wobei die einseitige Bildinformation zum Erhalt der Konturdaten der anderen Seite z.B. um die zentrale Längsachse des Fahrzeugs (2) rechnerisch gespiegelt wird. Die zentrale Längsachse kann aus den aufgenommenen Bildinformationen ermittelt werden.

Die Bilderfassung des Fahrzeugs (2) kann an dem in seiner Endposition oder Behandlungsstellung stehenden Fahrzeug (2) erfolgen. Hierbei ist durch die Bildaufnahme und Entfernungsmessung mit der in ihrer räumlichen Position bekannten Erfassungseinrichtung (3) automatisch ein ortsbezug der erfassten Fahrzeugkontur in der Behandlungsanlage (1) gegeben, der zur positionsgenauen Steuerung und Zustellung der Behandlungsaggregate (6) und des Portals (4) dient. Hierfür kann die Behandlungsanlage (1) ein zentrales und gemeinsames Koordinatensystem für die Konturenerfassung, die Behandlungsaggregate (6) und das Portal (4) haben.

Die Bilderfassung kann alternativ während der Einfahrt des Fahrzeugs (2) in die Behandlungsanlage (1), insbesondere in die Halle (21) erfolgen. Wenn das bewegte Fahrzeug (2) abgetastet wird, wird zusätzlich zur Kontur noch seine Endposition in geeigneter Weise erfasst, so dass die Fahrzeugkontur in einen räumlichen Bezug zu dem Koordinatensystem gesetzt werden kann.

Von der oder den Bilderfassungs- und Entfernungsmesseinrichtung(en) (7,8) können mehrere Bilder des gleichen Fahrzeugoberflächenbereichs oder von unterschiedlichen Oberflächenbereichen aufgenommen und ausgewertet werden. Diese Bilder können mit einer Matching-Technik zu einem Gesamtbild zusammengesetzt werden. Die Konturenauswertung kann an Hand des Gesamtbilds erfolgen.

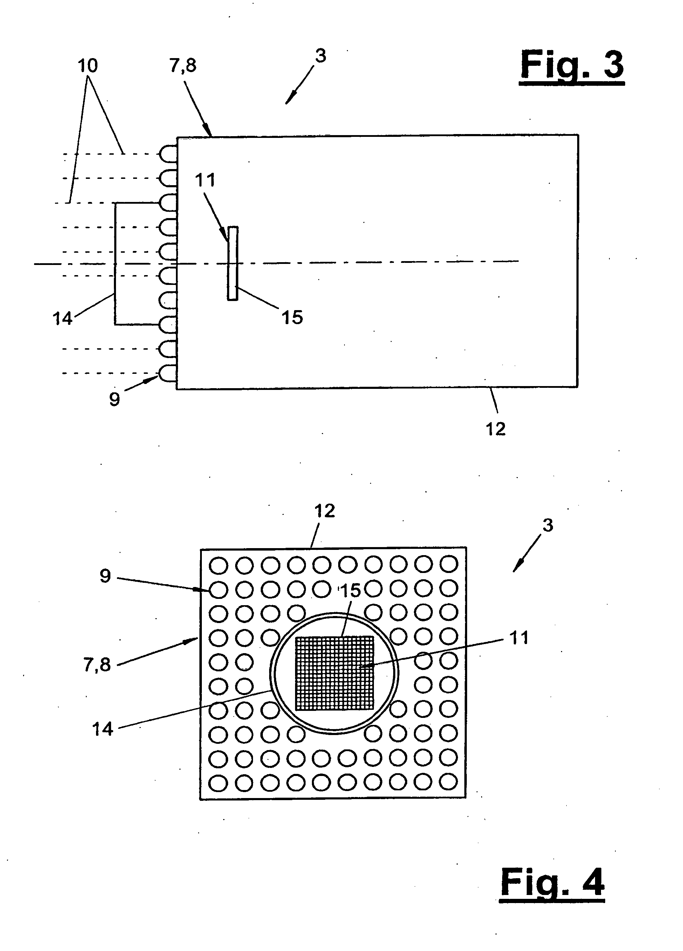

Figur 3 und 4 zeigen eine beispielhafte Ausführung einer Erfassungseinrichtung (3). Sie weist die besagte Bilderfassungseinrichtung (7) mit integrierter Entfernungsmesseinrichtung (8) auf. Die Bilderfassungs- und Entfernungsmesseinrichtung (7,8) ist als digitale Kamera ausgebildet und besitzt eine Sensoranordnung (11) sowie eine dieser zugeordnete Lichtquelle (9). Diese kann modulierte Lichtstrahlen oder Lichtwellen (10) aussenden, die parallel zur Blickrichtung der Kamera gerichtet sind. Die Modulation kann die Wellenlänge oder andere Lichteigenschaften betreffen. Die Modulation hat z.B. eine geeignete Wellenlänge, die z.B. größer als die maximale Fahrzeugabmessung, insbesondere die Fahrzeuglänge ist. Die Lichtstrahlen (10) können auf das Fahrzeug (2) gerichtet sein. Bei der optischen Abtastung wird die Fahrzeugoberfläche zumindest im abgetasteten Bereich mit dem modulierten Licht (10) bestrahlt und beleuchtet. Die Beleuchtung ist im Unterschied zur Laserstrahlen oder Lichtschnittstrahlen flächig und kann insbesondere großflächig sein.

In der bevorzugten Ausführungsform ist die Sensoranordnung (11) aus Photomischdetektor ausgebildet, der auch als PMD-Sensor bezeichnet wird. Die Sensoranordnung (11) ist auf einem Chip (15) angeordnet und in einem schützenden Gehäuse (12) untergebracht. Der Sensoranordnung (11) kann in Blickrichtung eine Optik (14) vorgeschaltet sein, die in einer Fassung am Gehäuse (12) angeordnet ist.

Die Sensoranordnung (11) weist eine Vielzahl von einzelnen Sensoren in einer dichten und gleichmäßige Pixelmatrix mit einer geeigneten Auflösung auf. Die Chipgröße ist beliebig skalierbar und kann eine beliebige Form, insbesondere eine Rechteckform oder eine quadratische Form aufweisen. Ferner ist außer dieser Flächenanordnung von Sensoren oder Pixeln auch eine Zeilenanordnung möglich. Für die Praxis ist z.B. eine Matrix von ca. 50 x 64 Pixel brauchbar. Die Matrix kann auch größer sein und z.B. ca. 200 x 200 Pixel oder mehr aufweisen.

Die einzelnen Sensoren oder Pixel können jeweils sowohl die einfallende Lichtmenge erfassen und dadurch Hell und Dunkel unterscheiden, als auch die Entfernung des betrachteten Bildpunkts messen. Die Lichtquelle (9) beleuchtet die Fahrzeugoberfläche mit dem ausgesandten modulierten Licht (10). Dessen Wellenlänge bewegt sich bevorzugt in einem für das menschliche Auge unsichtbaren Bereich, z.B. im Bereich von Infrarotlicht. Das von der Fahrzeugoberfläche reflektierte Licht trifft auf die Sensoranordnung (11) und deren Pixel, die ebenfalls an die modulierte Lichtquelle (9) bzw. an deren Modulationsgeber angeschlossen sind. Bei der Lichtreflexion an der Fahrzeugoberfläche kommt es zu Phasenverschiebungen zwischen der emittierten und der reflektierten Lichtwelle. Die Modulationen der emittierten und der reflektierten Lichtwelle überlagen sich. Hierbei werden die von der Sensoranordnung (11) in Elektronen gewandelten Photonen in Abhängigkeit vom Referenzsignal der modulierten Lichtemission auch im lichtempfindlichen Halbleiterbereich pixelweise in geeigneter weise, z.B. mit Hilfe einer Ladungsträgerschaukel entfernungsselektiv getrennt. Das optische Messsignal und das elektronische Referenzsignal werden pixelweise verglichen, wobei das resultierende Ausgangssignal bereits einen direkten Bezug zur Entfernungsinformation für jeden Bildpunkt und jedes Pixel hat. Die Messungen werden zur Erhöhung der Genauigkeit mehrmals durchgeführt und die Ergebnisse interpoliert. Hierbei findet eine getaktete Auswertung statt. Über die Mehrfachmessung und die Ladungsschaukel lassen sich in Verbindung mit dem mit geeigneter Wellenlänge modulierten Licht (10) auch Fremdlichteinflüsse ausschalten.

Jedes Pixel bzw. jeder Sensor der Sensoranordnung (11) nimmt die Helligkeit und die Entfernung eines betrachteten Punktes an der Fahrzeugoberfläche auf. Aus der Gesamtheit der Pixelinformationen ergibt sich ein dreidimensionales Bild des betrachteten Bereichs oder Ausschnitts der Fahrzeugoberfläche. Über die Optik (14), z.B. ein Objektiv mit geeigneter, von den Chipabmessungen abhängiger Brennweite kann die Größe des erfassten Bildausschnitts bestimmt werden. Z.B. kann ein weitwinkelobjektiv zum Einsatz kommen, um einen großen Bereich der räumlichen Fahrzeugoberfläche zu erfassen.

wie Figur 3 und 4 verdeutlichen, weist die Lichtquelle (9) eine Vielzahl von LEDs auf, die parallel zur optischen Kameraachse modulierte Lichtstrahlen (10) im Infrarotbereich emittieren. Die LEDs sind rund um die Sensoranordnung (11) und ggf. die Optik (14) angeordnet und können sich z.B. an der Front des Gehäuses (12) befinden.

Die Erfassung und Auswertung der Helligkeits- und Entfernungsinformationen jedes Sensors bzw. Pixels und die Generierung des dreidimensionalen Bildes kann auf dem Chip (15) durch eine integrierte Schaltung oder alternativ in einer getrennten Auswerteeinrichtung erfolgen.

Die Erfassungseinrichtung (3) ist mit einer Steuerung (13) verbunden, an welche die Sensoranordnungen (11) bzw. Chips (15) die dreidimensionalen Bildinformationen senden. Die Steuerung (13) kann die Bilddaten speichern und auswerten. Sie kann von mehreren Chips (15) die Informationen erhalten und diese gelieferten ausschnittsweisen Bildinformationen zu einem Gesamtbild in einem sog. Matching-Prozess zusammensetzen. Das Gesamtbild repräsentiert die prozessrelevante dreidimensionale äußere Fahrzeugkontur. Diese kann noch in einen räumlichen Bezug zum Portal (4) und den Behandlungsaggregaten (6) gesetzt werden. Dies kann durch ein von dem Fahrzeug (2) in der geparkten Endstellung aufgenommenes Bild geschehen, bei dem die ermittelten Abstände die Referenz für die Positionierung des Gesamtbildes bzw. der Fahrzeugkontur bilden. Alternativ kann die Position eines markanten Fahrzeugteils auch auf andere Weise aufgenommen und mit den Bildinformationen und der Fahrzeugkontur in einen Ortsbezug gesetzt werden.

Die Steuerung (13) kann die Steuerung für die Behandlungsaggregate (6) und das Portal (4) sein oder mit einer solchen Steuerung in Verbindung stehen. Entsprechend der erfassten und räumlich von dem Portal (4) positionierten Fahrzeugkontur können dann die Behandlungsaggregate (6) beim ein- oder mehrstufigen Behandlungsprozess gesteuert werden.

Abwandlungen der gezeigten Ausführungsform sind in verschiedener Weise möglich. In einer Autowaschstraße ist z.B. die Bilderfassungs- und Entfernungsmesseinrichtung (7,8) an einem eingangseitigen stationären Portal (4) angeordnet und tastet das mit der Schleppeinrichtung vorbeibewegte Fahrzeug (2) ab. Die Abtastung kann auch in einer Ruhe- oder wartestellung am Halleneingang oder davor geschehen. Die einmal gewonnenen Vorerfassungsdaten des Fahrzeugs (2) können innerhalb der Waschstraße von Station zu Station zur Steuerung der dortigen Behandlungsaggregate oder für andere Zwecke weitergereicht werden. Das gleiche kann auch in einer Taktanlage, in einer Doppelportalanlage oder dgl. geschehen. Die fortschreitende Fahrzeugposition kann hierbei durch die Schleppeinrichtung oder durch weitere Messeinrichtungen ermittelt werden, die an relevanten und eindeutigen Punkten, z.B. der Dachkante, der Reifenvorderseite oder dgl. messen.

Ferner kann bei der Konturenerfassung eine Fahrzeugerkennung durchgeführt werden, indem die erfassten Konturdaten mit gespeicherten vorlagedaten von bekannten Fahrzeugtypen verglichen werden. Für diese Erkennung kann ein relativ kleiner, aber markanter Konturenausschnitt genügen. Wenn ein Fahrzeug erkannt ist, können aus der gespeicherten Ronturenvorlage weitere, ggf. nicht erfasste Konturenmerkmale oder die gesamte dreidimensionale Fahrzeugkontur entnommen und zur Steuerung der Behandlungsaggregate (6) und ggf. des Portals (4) herangezogen werden.

Ferner sind Abwandlungen der Bilderfassungs- und Entfernungsmesseinrichtung (7,8) möglich. Sie kann an anderer Stelle der Behandlungsanlage (1) angeordnet sein und z.B. das einfahrende Fahrzeug (2) bei der Einfahrbewegung abtasten. Sie kann ferner am Hallendach in zentraler Position über der vorgesehenen Parkstellung des Fahrzeugs (2) in der Behandlungsanlage (1) angeordnet sein. Alternativ ist eine Anordnung der Bilderfassungs- und Entfernungsmesseinrichtung (7,8) an einem vom stehenden oder fahrenden Portal (4) in Fahrtrichtung (18) ausfahrbaren Ausleger möglich. Auf die Lichtquelle (9) kann verzichtet werden.

Die 3D-Kamera (7,8) kann statt eines PMD-Sensors (15) mit Entfernungsmessung über eine Ladungsschaukel einen CMOS/CCD-Sensor, z.B. von der Firma CSEM aufweisen, der die Entfernung über eine Laufzeitmessung des emittierten Lichts (10) pixelweise ermittelt. Die Bilderfassungs- und Entfernungsmesseinrichtung (7,8) kann ferner konstruktiv anders ausgebildet sein und insbesondere die Entfernung zum Fahrzeug auf andere weise als über eine pixelbezogene Abstandsmessung erkennen. Für die Bildaufnahme und die Entfernungsmessung können getrennte Sensoren in der Kamera oder Bilderfassungs- und Entfernungsmesseinrichtung (7,8) angeordnet sein, die ggf. benachbart sind und einen vorgegeben Ortsbezug haben sowie eine Zuordnung von Bild und Abstandsdaten erlauben.

### BEZUGSZEICHENLISTE

- 1: Behandlungsanlage, Autowaschanlage
- 2: Fahrzeug
- 3: Erfassungseinrichtung für Fahrzeugform
- 4: Portal
- 5: Fahrwerk
- 6: Behandlungsaggregat
- 7: Bilderfassungseinrichtung, Kamera
- 8: Entfernungsmesseinrichtung
- 9: Lichtquelle
- 10: Lichtstrahl, Laserstrahl
- 11: Sensoranordnung, Photomischdetektor
- 12: Gehäuse
- 13: Steuerung
- 14: Optik
- 15: Chip
- 16: Querjoch
- 17: Ständer, Säule
- 18: Fahrtrichtung
- 19: Dach- und Seitenbereich
- 20: Boden
- 21: Behandlungsraum, Waschhalle

## Patentansprüche

1. Behandlungsanlage für Landfahrzeuge (2) mit mindestens einem Behandlungsaggregat (6), wobei die Behandlungsanlage (1) eine Erfassungseinrichtung (3) zum dreidimensionalen Abtasten und Erfassen der Fahrzeugoberfläche aufweist und und die Erfassungseinrichtung (3) mindestens eine Bilderfassungseinrichtung (7) mit integrierter Entfernungsmesseinrichtung (8) für die Entfernung zum Fahrzeug (2) aufweist, wobei die Behandlungsanlage (1) als Waschstrasse für Lastkraftwagen oder Schienenfahrzeuge (2) ausgebildet ist und mehrere Stationen und mehrere Behandlungsaggregate (6) aufweist, wobei ein oder mehrere Behandlungsaggregate (6) entsprechend der erfassten Fahrzeugform in der Höhe und/oder im Abstand zum Fahrzeug (2) positionierbar sind, wobei mehrere Bilderfassungs- und Entfernungsmesseinrichtungen (7,8) an einem eingangseitigen stationären Portal (4) der Waschstrasse (1) oberhalb des Fahrzeugs (2) angeordnet sind und das mit der Schleppeinrichtung vorbeibewegte Fahrzeug (2) abtastet/abtasten, wobei die Bilderfassungs- und Entfernungsmesseinrichtungen (7,8) als digitale Kameras ausgebildet sind und eine Sensoranordnung (11) sowie eine dieser zugeordnete Lichtquelle (9) aufweisen, wobei die gewonnenen Vorerfassungsdaten des Fahrzeugs (2) innerhalb der Waschstraße von Station zu Station zur Steuerung der dortigen Behandlungsaggregate (6) weitergereicht werden.

2. Behandlungsanlage nach Anspruch 1, **dadurch gekennzeichnet, dass** die Kamera (7,8) eine Lichtquelle (9) mit moduliertem Licht (10) aufweist.

3. Behandlungsanlage nach Anspruch 1 oder 2, **dadurch gekennzeichnet, dass** die Lichtquelle (9) moduliertes Licht (10) im unsichtbaren Lichtbereich, insbesondere im Infrarotbereich, emittiert.

4. Behandlungsanlage nach Anspruch 1, 2 oder 3, **dadurch gekennzeichnet, dass** die Sensoranordnung (11) als Photomischdetektor oder als CMOS/CCD-Sensor ausgebildet ist.

5. Behandlungsanlage nach einem der vorhergehenden Ansprüche, **dadurch gekennzeichnet, dass** die Sensoranordnung (11) auf einem Chip (15) angeordnet ist.

6. Behandlungsanlage nach einem der vorhergehenden Ansprüche, **dadurch gekennzeichnet, dass** der Sensoranordnung (11) eine Optik (14) vorgeschaltet ist.

7. Behandlungsanlage nach einem der vorhergehenden Ansprüche, **dadurch gekennzeichnet, dass** die Erfassungseinrichtung (3) eine Steuerung (13) zur Auswertung der dreidimensionalen Bildinformationen der ein oder mehreren Kameras (7,8) und zur Ermittlung der Fahrzeugkontur sowie zur konturabhängigen Steuerung von ein oder mehreren Behandlungsaggregaten (6) aufweist.

8. Behandlungsanlage nach einem der vorhergehenden Ansprüche, **dadurch gekennzeichnet, dass** die Steuerung (13) die von mehreren Kameras (7,8) gelieferten ausschnittsweisen Bildinformationen zu einem Gesamtbild zusammensetzt.

9. Behandlungsanlage nach einem der vorhergehenden Ansprüche, **dadurch gekennzeichnet, dass** die Lichtquelle (9) mehrere LED's, insbesondere Laserdioden, aufweist.

10. Behandlungsanlage nach einem der vorhergehenden Ansprüche, **dadurch gekennzeichnet, dass** die Lichtquelle (9) eng benachbart zur Sensoranordnung (11) angeordnet ist.

11. Behandlungsanlage nach einem der vorhergehenden Ansprüche, **dadurch gekennzeichnet, dass** die Lichtquelle (9) die Sensoranordnung (11) umgibt.

12. Behandlungsanlage nach einem der vorhergehenden Ansprüche, **dadurch gekennzeichnet, dass** die fortschreitende Fahrzeugposition durch die Schleppeinrichtung oder durch weitere Messeinrichtungen ermittelt wird, die an relevanten und eindeutigen Punkten, insbesondere der Dachkante, der Reifenvorderseite, messen.

13. Verfahren zum Behandeln von Fahrzeugen (2) in einer Behandlungsanlage (1) mit mindestens einem Behandlungsaggregat (6), wobei die Fahrzeugoberfläche mit einer Erfassungseinrichtung (3) in der Behandlungsanlage (1) dreidimensional abgetastet und erfasst wird, wobei die Fahrzeugoberfläche mit mindestens einer Bilderfassungseinrichtung (7) mit integrierter Entfernungsmesseinrichtung (8) für die Entfernung zum Fahrzeug (2) abgetastet wird, wobei Lastkraftwagen oder Schienenfahrzeuge (2) in einer Waschstrasse (1) mit mehreren Stationen und mit mehreren Behandlungsaggregate (6) behandelt werden, wobei ein oder mehrere Behandlungsaggregate (6) entsprechend der erfassten Fahrzeugform in der Höhe und/oder im Abstand zum Fahrzeug (2) positioniert werden, wobei mehrere Bilderfassungs- und Entfernungsmesseinrichtungen (7,8) an einem eingangseitigen stationären Portal (4) der Waschstrasse (1) oberhalb des Fahrzeugs (2) angeordnet ist/sind und das mit der Schleppeinrichtung vorbeibewegte Fahrzeug (2) abtastet/abtasten, wobei die Bilderfassungs- und Entfernungsmesseinrichtungen (7,8) als digitale Kameras ausgebildet sind und eine Sensoranordnung (11) sowie eine dieser zugeordnete Lichtquelle (9) aufweisen, wobei die gewonnenen Vorerfassungsdaten des Fahrzeugs (2) innerhalb der Waschstraße von Station zu Station zur Steuerung der dortigen Behandlungsaggregate (6) weitergereicht werden.

## Claims

1. Treatment plant for agricultural vehicles (2) comprising at least one treatment unit (6), in which the treatment plant (1) has a detecting device (3) for three-dimensional scanning and detecting of the vehicle surface, and the detecting device (3) has at least one imaging device (7) with an integrated distance measuring device (8) for the distance from the vehicle (2), the treatment plant (1) being designed as a washing line for lorries or railbound vehicles (2) and having a plurality of stations and a plurality of treatment units (6), in which one or more treatment units (6) can be positioned in height and/or in distance from the vehicle (2) in accordance with the detected vehicle shape, in which a plurality of imaging and distance measuring devices (7, 8) are arranged at a stationary gantry (4), on the entrance side, of the washing line (1) above the vehicle (2) and scan the vehicle (2) moved past by the towing device, in which the imaging and distance measuring devices (7, 8) are designed as digital cameras and have a sensor arrangement (11) and a light source (9) assigned to the latter, and in which the predetection data of the vehicle (2) obtained are passed on within the washing line from station to station in order to control the treatment unit (6) there.

2. Treatment plant according to Claim 1, **characterized in that** the camera (7, 8) has a light source (9) with modulated light (10).

3. Treatment plant according to Claim 1 or 2, **characterized in that** the light source (9) emits modulated light (10) in the invisible optical range, in particular in the infrared range.

4. Treatment plant according to Claim 1, 2 or 3, **characterized in that** the sensor arrangement (11) is designed as a photomix detector or as a CMOS/CCD sensor.

5. Treatment plant according to one of the preceding claims, **characterized in that** the sensor arrangement (11) is arranged on a chip (15).

6. Treatment plant according to one of the preceding claims, **characterized in that** an optical system (14) is introduced upstream of the sensor arrangement (11).

7. Treatment plant according to one of the preceding claims, **characterized in that** the detecting device (3) has a controller (13) for evaluating the three-dimensional image information of the one or more cameras (7, 8) and for determining the vehicle contour as well as for controlling one or more treatment units (6) as a function of contour.

8. Treatment plant according to one of the preceding claims, **characterized in that** the controller (13) forms a total image by combining the image information delivered segmentally by a plurality of cameras (7, 8).

9. Treatment plant according to one of the preceding claims, **characterized in that** the light source (9) has a plurality of LEDs, in particular laser diodes.

10. Treatment plant according to one of the preceding claims, **characterized in that** the light source (9) is arranged very close to the sensor arrangement (11).

11. Treatment plant according to one of the preceding claims, **characterized in that** the light source (9) surrounds the sensor arrangement (11).

12. Treatment plant according to one of the preceding claims, **characterized in that** the advancing vehicle position is determined by the towing device or by further measuring devices which measure at relevant and unambiguous points, in particular the roof edge, the tyre front side.

13. Method for treating vehicles (2) in a treatment plant (1) comprising at least one treatment unit (6), in which the vehicle surface is scanned and detected in three dimensions using a detecting device (3) in the treatment plant (1), in which the vehicle surface is scanned using at least one imaging device (7) with an integrated distance measuring device (8) for the distance from the vehicle (2), in which lorries or railbound vehicles (2) are treated in a washing line (1) with a plurality of stations and with a plurality of treatment units (6), in which one or more treatment units (6) are positioned in height and/or in distance from the vehicle (2) in accordance with the detected vehicle shape, in which a plurality of imaging and distance measuring devices (7, 8) are arranged at a stationary gantry (4), on the entrance side, of the washing line (1) above the vehicle (2) and scan the vehicle (2) moved past by the towing device, in which the imaging and distance measuring devices (7, 8) are designed as digital cameras and have a sensor arrangement (11) and a light source (9) assigned to the latter, and in which the predetection data of the vehicle (2) obtained are passed on within the washing line from station to station in order to control the treatment unit (6) there.

## Revendications

1. Unité de traitement destinée à des véhicules terrestres (2) comportant au moins une installation de traitement (6), dans lequel l'unité de traitement (1) comporte un dispositif d'acquisition (3) destiné à effectuer un balayage tridimensionnel et à acquérir la surface du véhicule et dans lequel le dispositif d'acquisition (3) comporte au moins un dispositif d'acquisition d'image (7) comportant un dispositif de mesure de distance intégré (8) destiné à la distance par rapport au véhicule (2), dans lequel l'unité de traitement (1) est réalisée sous la forme d'une ligne de lavage pour poids lourds ou véhicules ferroviaires (2) et comporte de multiples installations et de multiples groupes de traitement (6), dans lequel une ou de multiples installation(s) de traitement (6) peut/peuvent être positionnée(s) d'une manière qui correspond à la forme acquise du véhicule en hauteur et/ou en distance par rapport au véhicule (2), dans lequel de multiples dispositifs d'acquisition d'image et/ou de mesure de distance (7, 8) sont disposés sur un portique stationnaire d'entrée (4) de la ligne de lavage (1) au-dessus du véhicule (2) et balaye/balayent le véhicule (2) entraîné par le dispositif de remorquage, dans lequel les dispositifs d'acquisition d'image et/ou de mesure de distance (7, 8) sont réalisés sous la forme de caméras numériques et comprennent un système de capteur (11) ainsi qu'une source lumineuse (9) associée à celui-ci, dans lequel les données de pré-acquisition obtenues du véhicule (2) sont retransmises à l'intérieur de la ligne de lavage de station à station pour commander les installations de traitement (6) qui s'y trouvent.

2. Unité de traitement selon la revendication 1, **caractérisée en ce que** la caméra (7, 8) comprend une source lumineuse (9) à lumière modulée (10).

3. Unité de traitement selon la revendication 1 ou 2, **caractérisée en ce que** la source lumineuse (9) émet une lumière modulée (10) dans une région de lumière non visible, notamment dans la région infrarouge.

4. Unité de traitement selon la revendication 1, 2 ou 3, **caractérisée en ce que** le système de capteur (11) est réalisé sous la forme d'un détecteur de mélange photonique ou d'un capteur CMOS/CCD.

5. Unité de traitement selon l'une quelconque des revendications précédentes, **caractérisée en ce que** le système de capteur (11) est disposé sur une puce (15).

6. Unité de traitement selon l'une quelconque des revendications précédentes, **caractérisée en ce qu'**une optique (14) est reliée en amont du système de capteur (11).

7. Unité de traitement selon l'une quelconque des revendications précédentes, **caractérisée en ce que** le dispositif d'acquisition (3) comprend une unité de commande (13) destinée à évaluer les informations d'images tridimensionnelles de la caméra ou des multiples caméras (7, 8), à déterminer le contour du véhicule et à commander en fonction du contour une ou plusieurs installations de traitement (6).

8. Unité de traitement selon l'une quelconque des revendications précédentes, **caractérisée en ce que** l'unité de commande (13) assemble les informations d'images partielles délivrées par de multiples caméras (7, 8) en une image globale.

9. Unité de traitement selon l'une quelconque des revendications précédentes, **caractérisée en ce que** la source lumineuse (9) comprend une pluralité de LED, notamment des diodes laser.

10. Unité de traitement selon l'une quelconque des revendications précédentes, **caractérisée en ce que** la source lumineuse (9) est disposée à proximité immédiate du système de capteur (11).

11. Unité de traitement selon l'une quelconque des revendications précédentes, **caractérisée en ce que** la source lumineuse (9) entoure le système de capteur (11).

12. Unité de traitement selon l'une quelconque des revendications précédentes, **caractérisée en ce que** la position du véhicule en mouvement est déterminée par le dispositif de remorquage ou par d'autres dispositifs de mesure qui effectuent des mesures en des points pertinents et uniques, notamment le bord du toit ou la face avant des pneumatiques.

13. Procédé de traitement de véhicules (2) dans une unité de traitement (1) comportant au moins une installation de traitement (6), dans lequel la surface du véhicule est balayée et acquise de manière tridimensionnelle au moyen d'un dispositif d'acquisition (3) dans l'unité de traitement (1), dans lequel la surface du véhicule est balayée au moyen d'au moins un dispositif d'acquisition d'image (7) comportant un dispositif de mesure de distance intégré (8) destiné la distance par rapport au véhicule (2), dans lequel des poids lourds ou des véhicules ferroviaires (2) sont traités dans une ligne de lavage (1) comportant de multiples stations et de multiples installations de traitement (6), dans lequel une ou plusieurs installation(s) de traitement (6) est/sont positionnée(s) d'une manière qui correspond à la forme acquise du véhicule en hauteur et/ou en distance par rapport au véhicule (2), dans lequel de multiples dispositifs d'acquisition d'images et de mesure de distance (7, 8) est/sont disposé(s) sur un portique stationnaire d'entrée (4) de la ligne de lavage (1) au-dessus du véhicule (2) et balaye/balayent le véhicule (2) entraîné par le dispositif de remorquage, dans lequel les dispositifs d'acquisition d'images et de mesure de distance (7, 8) sont réalisés sous la forme de caméras numériques et comportent un système de capteur (11) ainsi qu'une source lumineuse (9) associée à celui-ci, dans lequel les données de pré-acquisition obtenues du véhicule (2) sont retransmises de station en station à l'intérieur de la ligne de lavage pour commander les installations de traitement (6) qui s'y trouvent.
